# EUROPÄISCHE PATENTSCHRIFT

(11) **EP 0 974 002 B1**
(45) Veröffentlichungstag und Bekanntmachung des Hinweises auf die Patenterteilung: **04.09.2002**
(21) Anmeldenummer: 98917099.8
(22) Anmeldetag: 30.03.1998
(51) Int. Cl.: F01N 9/00, F01N 3/08

(54) **VERFAHREN ZUR ÜBERWACHUNG EINES NOx-SPEICHERS**
PROCESS FOR MONITORING A NOx ACCUMULATOR
PROCEDE DE SURVEILLANCE D'UN ACCUMULATEUR DE NOx

(30) Priorität: 09.04.1997 DE 19714715; 25.08.1997 DE 19736967
(43) Veröffentlichungstag der Anmeldung: 26.01.2000
(60) Teilanmeldung: 01122659.4
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); BRÜCK, Rolf, D-51429 Bergisch Gladbach (DE)
(74) Vertreter: Kahlhöfer, Hermann, Dipl.-Phys.
(86) Internationale Anmeldenummer: EP9801848
(87) Internationale Veröffentlichungsnummer: WO98045586

(56) Entgegenhaltungen:
- EP-A- 0 598 916
- DE-A- 19 511 548
- DE-C- 19 607 151
- US-A- 5 402 641

## Beschreibung

Die vorliegende Erfindung betrifft ein Verfahren zur Überwachung eines regenerierbaren NOx-Speichers in einem Abgasstrang, durch den ein NOx-haltiges Gas strömt. Die Erfindung ist insbesondere bei der Überwachung von Abgas einer Verbrennungsktaftmaschine einsetzbar, insbesondere Diesel- und Magermotoren.

Das zunehmende Umweltbewußtsein und die damit einhergehende immer strenger werdende Abgasgesetzgebung macht es erforderlich, daß als schädlich eingestufte Abgaskomponenten weitestgehend reduziert werden. Der heute in Kraftfahrzeugen übliche Dreiwege-Katalysator ist in der Lage, Kohlenmonoxid (CO), Kohlenwasserstoffe (HC) und Stickstoffoxide (NOx) umzusetzen. Eine Überwachung und Steuerung des Katalysators erfolgt z. B. mittels einer Sauerstoff-Sonde. Diese nimmt den Restsauerstoffgehalt im Abgas auf, woraus das Luft-Brennstoff-Verhältnis des dem Motor zuzuführenden Gemisches eingestellt wird. Durch entsprechende Regelung des Restsauerstoffgehaltes wird sichergestellt, daß der Katalysator die Abgase in ausreichender Weise umsetzt. Weiterhin ist es ebenfalls bekannt, das Temperaturprofil am Katalysator zu ermitteln und dieses als Warn- oder Steuergröße zu verwenden. Eine Weiterentwicklung dieses Verfahrens gestattet es, die bei der kacalytischen Reaktion freiwerdende Wärmemenge zu ermitteln und mittels einer, dem Katalysator nachgeschalteten Lambda-Sonde über eine Entropie-betrachtung auf das Abgasverhalten des Motors zurückzuschließen. Die soeben beschriebenen drei verschiedenen Möglichkeiten, einen Dreiwege-Katalysator zu überwachen, werden in der EP 0 298 240 B1 beschrieben.

Insbesondere während der Kaltstartphase fällt bei einer Verbrennungskraftmaschine ein erhöhter Schadstoffausstoß an. Um diesen zu reduzieren, werden beheizte Katalysatoren im Abgasstrang einer Verbrennungskraftmaschine angesetzt. Der Betrieb eines derartigen Katalysators geht zum Beispiel aus der WO 93/17228 bzw. der dazu äquivalenten EP 0 628 134 B1 hervor. Die Verwendung von Adsorbern zur Speicherung von während der Startphase anfallenden unverbrannten Kohlenwasserstoffen und deren Freigabe bei betriebsheißem Katalysator gehört ebenfalls zum Stand der Technik. Beides wird beispielsweise in der EP 0 485 179 beschrieben. Gerade für die katalytische Umsetzung von Stickstoffoxiden haben sich Zeolithe und andere Werkstoffe als geeignet erwiesen, die auch als Kohlenwasserstoff-Speicher einsetzbar sind. Geeignete Katalysatoren werden beispielsweise in der EP 0 459 396 und der EP 0 286 967 offenbart.

Die Betriebsfähigkeit eines Katalysators wird also, wie oben beschrieben, dadurch überwacht, daß seine katalytische Wirkung während des Betriebes überprüft wird. Verschiedene Verfahren dazu werden in der WO 92/03643 bzw. der dazu äquivalenten EP 0 545 976 B1, der WO 94/21902, der WO 91/14855 bzw. der dazu äquivalenten EP 0 521 052 B1, der WO 92/03642 bzw. der dazu äquivalenten EP 0 545 974 B1 und der DE 26 43 739 beschrieben. Letztere offenbart beispielsweise, wie über eine Temperaturvergleichsmessung mit Hilfe zweier Temperaturfühler die am Katalysator ablaufende Reaktion gemessen wird. Die so ermittelte Temperaturdifferenz gibt einen Hinweis darauf, ob der Katalysator noch funktionsfähig ist oder nicht. Diese Art der Temperaturüberwachung ist nicht nur bei einem Hauptkatalysator, sondern auch bei einem Vorkatalysator anwendbar.

Ein Temperaturmeßfühler zur Überwachung ist beispielsweise bei aus teilweise strukturierten Blechlagen aufgebauten Wabenkörpern zwischen diesen anbringbar. Dieses ist in der EP 0 603 221 B1 beschrieben.

Die Betriebsweise von Katalysatoren hängt von der Betriebsweise der Verbrennungskraftmaschine ab. Bei stationären Verbrennungskraftmaschinen ist in Deutschland die TA-Luft die einzuhaltende Verordnung. Da die Stickoxidbegrenzung von der Brennstoffwärmeleistung der Verbrennungskraftanlage und von der Motorenart abhängt, führte der Gesetzgeber eine sogenannte Dynamisierungsklausel für Selbstzündungsmotoren ein: Entsprechend dem Stand der Technik sind motorische und andere Maßnahmen zur Verminderung von Emissionen auszuschöpfen. Hintergrund der Dynamisierungsklausel war der 1985 nicht hinreichende Reifegrad von Entstickungsanlagen. Für stationär betriebene Verbrennungskraftanlagen wird zur Entstickung Harnstoff verwendet.

Bei Verbrennungskraftmaschinen für Kraftfahrzeuge scheitert die Verwendung von Harnstoff u.a. an dem dafür mitzuführeuden Tank und dessen Gewicht. Ausgehend von den drei hinsichtlich ihrer Bildung unterscheidbaren Stickstoffoxiden, nämlich Brennstoff-, promptes und thermisches Stickstoffoxid, werden andere Wege gesucht, die Stickoxidbildung insbesondere des thermischen Stickoxides niedrig zu halten. Bei Nutzfahrzeugen ist es bekannt geworden, eine Abgasrückführung mit rückgekühlten Abgasen durchzuführen. Auch ist es bekannt, daß durch Wassereinspritzung die NOx-Emissionen reduziert werden können. Jedoch besteht bezüglich dieser Möglichkeit das Problem der Frostsicherheit und Mitführung des Betriebsmittels Wasser. Ein anderer Weg, die Stickoxid-Emissionen zu verringern, besteht darin, diese zwischenzuspeichern. Dieses ist beispielsweise möglich mittels eines Speichers, der Barium oder Platin enthält.

Aufgabe der vorliegenden Erfindung ist es nun, ein Verfahren zu schaffen, mit dem ein NOx-Speicher zumindest auf seine Funktionsfähigkeit überprüft werden kann.

Aus der EP-A-598916 geht eine Verbrennungskraftmaschine hervor, der ein NOx-Speicher nachgeschaltet ist. Vor dem NOx-Speicher befindet sich ein Temperatursensor, der zur Aufnahme der Abgastemperatur dient. Weiterhin ist aus diesem Dokument bekannt, den NOx-Speicher durch Anfetten des Abgases zu regenerieren, wobei dies über ein elektronisches Bauteil erfolgt, welches über ein entsprechendes Management zur Steuerung des Brennstoff-Luft-Gemisches sowie der Temperaturmessung verfügt. Weiterhin ist das Management in der Lage, über die Umdrehungsgeschwindigkeit der Verbrennungskraftmaschine pro Zeiteinheit auf den Ausstoß an NOx im Abgas und damit auf die durch den NOx-Speicher adsorbierte NOx-Menge zu schließen. Eine Regenerierung wird ausgelöst, wenn die berechnete adsorbierte NOx-Menge im Adsorber eine bestimmte Speicherkapazität des Adsorbers übersteigt, welche infolge der vor dem NOx-Speicher gemessenen Temperatur unterstellt wird. Infolge der Anordnung des Temperatursensors in Strömungsrichtung vor dem NOx-Speicher ist die Aktivierung einer Regenerationsphase allein von den Vorgängen in der Brennkraftmaschine abhängig.

Die vorliegende Aufgabe wird mit einem Verfahren mit den Merkmalen des Anspruches 1 gelöst. Weitere vorteilhafte Merkmale und Ausgestaltungen sind in den abhängigen Ansprüchen angegeben.

Ein erfindungsgemäßes Verfahren zur Überwachung eines regenerierbaren NOx-Speichers in einem Abgasstrang, durch den NOx-haltiges Gas strömt, sieht eine Durchführung einer Temperaturmessung im Abgasstrang vor, aus der auf die Betriebsfähigkeit, den Betriebszustand und/oder auf die Speicherkapazität des NOx-Speichers geschlossen wird. Als Abgasstrang sind all diejenigen Leitungen zu verstehen, die das von einer NOx erzeugenden Quelle, beispielsweise eine Verbrennungskraftmaschine, stammende Abgas wegführen. Die Betriebsfähigkeit sagt aus, ob der NOx-Speicher überhaupt noch in der Lage ist, Stickoxide zu speichern. Mittels der Überwachung der Betriebsfähigkeit ist durch Vorgabe von einem Grenzwert oder einer Bandbreite bzgl. der gemessenen Temperatur auf eine, den Abgasvorschriften entsprechende Betriebsfähigkeit des NOx-Speichers abzielende Überprüfung möglich. Der Betriebszustand gibt eine zumindest für den Zeitpunkt der Temperaturmessung geltende Aussage bezüglich einer Wertung des Verhaltens des Speichers in bezug auf beispielsweise vorgegebene Abgasgrenzwerte, Temperaturen, Alterungszustand o.ä. und ist eine qualitative Aussage. Die Speicherkapazität des NOx-Speichers dagegen ist eine quantitative Aussage, die absolut ist oder auf einen Normzustand bezogen wird.

Eine Weiterbildung des Verfahrens sieht die Durchrührung der Temperaturmessung zu einem definierten Zeitpunkt vor, was vorteilhafterweise durch eine Steuerung oder sogar Regelung für den NOx-Speicher oder in Verbindung mit weiteren, zusätzlich im Abgasstrang angeordneten Vorrichtungssteuerungen durchführbar ist. Der definierte Zeitpunkt ist in einer Ausführung des Verfahrens entsprechend der Betriebsweise des NOx-Speichers einstellbar. Ist der Speicher einer Verbrennungskraftmaschine nachgeschaltet und wird diese in etwa unter konstanter Last gefahren, wird der Zeitpunkt der Temperaturmessung so eingestellt, daß bei einer bekannten möglichen Speichermenge von NOx des Speichers dieser Grenzwert mit Sicherheit nicht überschritten wird. Bei der Berücksichtigung eines derartigen Grenzwertes können neben Parametern wie Aufbau, Material und Betriebsweise des NOx-Speichers auch zeitbedingte Faktoren wie Alterung eingehen. Die Überwachung erfolgt in einer Ausführung des Verfahrens durch eine kontinuierliche Temperaturmessung, in einer anderen Ausführung durch voneinander beabstandete, einzelne Temperaturmessungen. Weiterhin sind zwei oder mehr aufeinanderfolgende Temperaturmessungen miteinander verknüpfbar. Bei aufeinanderfolgenden Temperaturmessungen wird in einer Weiterentwicklung des Verfahrens der Abstand zwischen diesen verkürzt, wenn der NOx-Speicher eine signifikante Reduzierung seiner Fähigkeiten aufweist. Dadurch ist sichergestellt, daß sein nicht mehr tolerierbarer Speicherbetrieb frühzeitig registriert wird und entsprechende Maßnahmen ergriffen werden können.

Die Temperaturmessung im Abgasstrang erfolgt entweder als direkte Temperaturmessung von zumindest einem Teil des NOx-Speichers oder als eine mittelbare Temperaturmessung mittels des den NOx-Speicher durchströmenden Gasstromes. Die direkte Temperaturmessung erfolgt im Material des Speichers selbst. Ein Temperatursensor ist dazu beispielsweise auf der Oberfläche, in einer Oberschicht oder direkt im Material des NOx-Speichers angeordnet. Die Art des Stromsensors genauso wie der Ort seiner Anbringung hängt davon ab, wie der NOx-Speicher aufgebaut ist. Der NOx-Speicher kann aus Keramik, gesintert oder extrudiert, aber genauso aus Blechen, die beispielsweise zumindest teilweise strukturiert geschichtet sind, aufgebaut sein. Auch die Sinterung bzw. Extrudierung von Metall mit Keramikpulver erweist sich als vorteilhaft, um die verschiedenen Eigenschaften der Materialien miteinander verknüpfen zu können. Der NOx-Speicher ist als Wabenkörper monolithisch ausgestaltbar. Andere Formgebungen sind ebenfalls möglich. Das NOx-speichernde Material ist in einer vorteilhaften Ausführung im Wandmaterial verteilt, insbesondere so, daß die Speicherkapazität vollständig ausgenutzt werden kann. Eine andere günstige Ausgestaltung sieht eine Beschichtung beispielsweise eines aus Blechen aufgebauten NOx-Speichers vor. Weist das Material des NOx-Speichers eine schlechte Wärmeleitfähigkeit auf, ist der Temperatursensor nahe zu einer durch das von NOx-haltigem Gas überströmten Oberfläche anzubringen. Bei Speichern mit guter Wärmeleitfähigkeit, beispielsweise metallenen Speichern, ist ein Temperatursensor einsetzbar, wie er aus der im Stand der Technik schon genannten EP 0 603 222 B1 offenbart ist und deren Merkmale zum Inhalt dieser Beschreibung gehören. Dazu muß sichergestellt sein, daß es durch die Beschichtung eines derartigen Körpers nicht zu Verfälschungen der Temperaturmessung kommt.

Die mittelbare Temperaturmessung mittels des durch den NOx-Speicher durchströmenden Gasstromes wird in einer weiteren Ausführung des Verfahrens durch ein in der Gasströmung sitzenden Temperatursensor durchgerührt. Dazu sind alle im Stand der Technik bekannten und geeigneten Temperatursensoren wie Thermo-Elemente oder ähnliches verwendbar. Der Temperatursensor wird innerhalb des Speichers in einem der Kanäle angeordnet. In einer weiteren vorteilhaften Ausgestaltung des Verfahrens sitzt der Temperatursensor in der Gasströmung hinter dem NOx-Speicher, insbesondere vor einem eventuell nachgeschalteten Dreiwege-Katalysator. An dieser Anordnung läßt sich nun auch am einfachsten der Begriff der mittelbaren Temperaturmessung erklären. Es wird dabei nämlich vom Gasstrom auf den NOx-Speicher zurückgeschlossen.

Die Temperaturmessung erfolgt vor, während und/oder nach einer Regenerationsphase des NOx-Speichers. Bei diesen definierten Zeitpunkten haben sich die folgenden Kombinationen als besonders vorteilhaft erwiesen:
- Eine Temperaturmessung während der Regenerationsphase: Über eine Messung zu einem bestimmten Zeitpunkt oder auch über einen Zeitraum ist eine Aussage zum NOx-Speicher möglich,
- eine Temperaturmessung unmittelbar vor der Regenerationsphase und während dieser: Aus der Temperaturdifferenz kann auf den NOx-Speicher zurückgeschlossen werden,
- während und nach der Regenerationsphase: Auch dieses läßt beispielsweise aus einer Temperaturdifferenz einen Schluß auf den Speicher und insbesondere auch auf die Qualität der Regeneration zu,
- Kombinationen von obigen Temperaturmessungen: Diese ergeben eine besonders genaue Aussagekraft bezüglich des Verhaltens des NOx-Speichers.

Die Temperatur wird so gemessen, daß sie direkt einen Rückschluß auf die Betriebsfähigkeit, den Betriebszustand und/oder auf die Speicherkapazität des NOx-Speichers zuläßt. Darunter ist zu verstehen, daß bei einem derartigen Vorgehen ohne weitere Umrechnungsschritte von der gemessenen Temperatur ausgehend auf den Speicher zurückgeschlossen wird.

Für eine besonders signifikante Aussage der Temperaturmessung ist es vorteilhaft, wenn die Regenerationsphase innerhalb von Sekunden, insbesondere innerhalb einer Sekunde oder weniger abgeschlossen wird. Die Regeneration, welche eine exotherme Reaktion verursacht, ist durch einen Temperaturanstieg feststellbar. Diese Änderung der Temperatur und ihre Art der Änderung ist zum einen am Speichermaterial selbst, zum anderen an dem durch den Speicher strömenden Gas feststellbar. Je kürzer die Regenerationsphase zur Freisetzung der gespeicherten Stickoxide ist, umso deutlicher fällt der Temperaturanstieg aus. Angestrebt wird daher eine besonders schlagartig über den gesamten Querschnitt des NOx-Speichers entstehender Temperaturanstieg. Dieser ist dann innerhalb oder auch stromabwärts vom Speicher aufnehmbar. Dieser Temperaturanstieg kann weiterhin dadurch verstärkt werden, daß im NOx-Speicher ebenfalls eine Oxidation ausgelöst wird. Diese kann ausgelöst werden aufgrund der exothermen Reaktion oder durch andere Mittel, beispielsweise durch eine katalytische Beschichtung bzw. entsprechende Zugabe eines Gases in den NOx-haltigen Gasstrom, der den Speicher durchströmt.

Die Regenerationsphase selbst wird in einer Ausführung des Verfahrens durch Hinzufügen eines die Regeneration auslösenden Mittels in den NOx-haltigen Gasstrom verursacht, wobei das Mittel in der Lage ist, die gespeicherten Stickoxide zu lösen. Insbesondere ist das Mittel in der Lage, mit den Stickoxiden selbst an einer Reaktion teilzunehmen. In einer Weiterbildung dieses Verfahrens erfolgt die Zugabe des die Regeneration auslösenden Mittels in der das NOx erzeugenden Quelle selbst. Insbesondere bei diesem Verfahren ist es vorteilhaft, wenn die im Speicher stattfindenden Reaktionen katalytisch durchgeführt werden. Dazu weist der NOx-Speicher beispielsweise neben dem Speichermaterial auch eine katalytische Beschichtung auf.

Für die Temperaturmessung genauso wie für ihre Auswertung ist es wichtig, daß sie selbst und/oder die Regeneration gesteuert erfolgt. Bei einer Regenerationsphase, die innerhalb von Zehntelsekunden abläuft, treten ansonsten zeitliche Ungenauigkeiten auf, die das oder die Meßergebnisse so verfälschen würden, daß eine Aussage bezüglich des Verhaltens des NOx-Speichers aus der Temperatur nicht möglich ist. Bei Verwendung einer gemeinsamen Elektronik für die Steuerung der Regeneration und der Temperaturmessung ergibt sich der weitere Vorteil, daß die Auswahl für einen definierten Zeitpunkt der Messung bzw. der Regeneration im Zusammenhang getroffen werden kann, beispielsweise abhängig von übergeordneten Gesichtspunkten wie der Betriebsweise einer Verbrennungskraftmaschine.

Für eine Aussage über die Betriebsfähigkeit, den Betriebszustand und/oder die Speicherkapazität des NOx-Speichers ist es auch vorteilhaft, die Temperaturmessung so durchzuführen, daß dadurch die Beobachtung des zeitlichen Verhaltens der Temperatur möglich ist. Bei Katalysatoren werden verschiedenste Temperaturmeßtechniken und Auswertemethoden verwandt, um die Aktivität des Katalysators und sein Verhalten beispielsweise für die Zukunft feststellen zu können. Insbesondere für ein Verfahren, bei dem die Temperatur im Zusammenhang mit einer Regenerationsphase des NOx-Speichers gemessen wird, sind derartige Meßverfahren ebenfalls anwendbar. Hierbei wird jedoch im Unterschied zu einem Katalysator bei einem NOx-Speicher von einer Phase, in der der NOx-Speicher nicht im Speicherbetrieb arbeitet, auf seine Fähigkeit zur Speicherung geschlossen. Aus den schon im Stand der Technik genannten Schriften sind verschiedene Temperaturauswerteverfahren, Meßstellen und Meßfühler bekannt, die auch hier mit entsprechender Anpassung an den NOx-Speicher anwendbar sind. Dabei handelt es sich bei den Schriften insbesondere um die WO 94/21902, die EP 0 521 052 B1, die EP 0 545 974 B1, die EP 0 603 222 B1, die EP 0 545 976 und die DE 26 43 739, deren entsprechenden Merkmale zum Inhalt dieser Beschreibung gehören.

Bei einem weiteren Verfahren entsprechend der Erfindung wird zum Rückschluß auf die Betriebsfähigkeit, den Betriebszustand und/oder die Speicherkapazität des NOx-Speichers ein funktionaler Zusammenhang zwischen der Temperatur, einer Charakteristik des NOx-Speichers und/oder eines Gasbestandteiles des NOx-haltigen Gases genutzt. Dazu können Erfahrungswerte über das Langzeitverhalten des NOx-Speichers ebenso wie Zusammenhänge, die sich aus der Verarbeitung verschiedener Materialien für den NOx-Speicher ergeben, genutzt werden. Bezüglich eines oder mehrerer Gasbestandteiles sind deren Entropien oder Enthalpien geeignet, den NOx-Speicher zu überwachen. Dieses ist beispielsweise durch Abwandlung des aus der EP 0 298 240 B 1 bekannten Verfahrens zum Überwachen des Schadstoffgehaltes von Abgasen bei Brennkraftmaschinen möglich, was ebenfalls mit seinen entsprechenden Merkmalen zum Inhalt dieser Beschreibung gehört.

Ein weiteres vorteilhaftes Verfahren zur Überwachung des NOx-Speichers sieht die folgenden Schritte vor: Daß
- das im NOx-Speicher gespeicherte NOx in Abhängigkeit vom NOx-haltigen Gasstrom berechnet wird,
- bei Überschreiten eines vorgebbaren Grenzwertes für das NOx eine Regenerierung ausgelöst wird,
- wobei aus der dabei gemessenen Temperatur durch Vergleich mit einem vorgebbaren Temperaturwert und/oder einer vorgebbaren Temperaturbrandbreite der Rückschluß auf die Betriebsfähigkeit, den Betriebszustand und/oder auf die Speicherkapazität des NOx-Speichers erfolgt.

In einer Steuerung oder auch Regelung, die beispielsweise über eine die NOx-Quelle steuernde Elektronik erfolgt, wird in einer Ausbildung des Verfahrens festgestellt, wie groß der Volumenstrom und der NOx-Anteil im Gasstrom ist, der durch den Speicher strömt. Der Volumenstrom ist über bekannte Meßmethoden feststellbar, der NOx-Anteil beispielsweise bei einer Verbrennungskraftmaschine aus der Berechnung des Luft-Kraftstoffgemisches, welches dieser zugeführt wird. Zur Berechnung sind aber auch andere Daten der Verbrennungsmaschine nutzbar, wie deren Betriebs- und/oder Zustandsdaten. Diese sind auch in zumindest einem Kennfeld aufnehmbar und so abspeicherbar, daß sie ein Motormanagement nutzen kann. Vergleichbares ist auch mit geeigneten Daten bei anderen Anwendungsgebieten der Erfindung anwendbar. Um zu vermeiden, daß Stickoxide ungespeichert den Speicher durchströmen, ist der Grenzwert so festgelegt, daß dieses ausschließbar ist. Dieser Grenzwert muß nicht konstant festgelegt sein. Vielmehr ist er beispielsweise aufgrund von Alterung des NOx-Speichers über einen langen Betriebszeitraum auch an die Funktionsfähigkeit desselben anpaßbar.

Der vorgebbare Temperaturwert und/oder die vorgebbare Temperaturbandbreite sind aus Erfahrungswerten für den jeweils verwendeten NOx-Speicher herauskristallisierbar und in einer geeigneten Elektronik abspeicherbar. Diese Erfahrungswerte können auch in Form eines funktionalen Zusammenhanges vorgegeben werden, wobei verschiedenste Parameter wie Alterung, Temperatur, Betriebsweise und anderes einfließen können.

Bei einer Weiterentwicklung des Verfahrens wird ab einer definierten gemessenen Temperatur ein Signal ausgelöst, wobei das Signal von einer Wertung der Betriebsfähigkeit, des Betriebszustandes und/oder der Speicherkapazität des NOx-Speichers abhängt. In Verbindung mit zur Verfügung stehenden Daten über einen Speicher und vorgebbaren Bewertungskriterien ist die Auswertung bezüglich der gemessenen Temperatur so gestaltbar, daß dem Nutzer jedwede Information wie die noch verfügbare Speicherkapazität, die wahrscheinliche Lebensdauer oder ähnliches zur Verfügung steht. Das ab einer definierten, d. h. vorgebbaren Temperatur ausgelöste Signal ist insbesondere auch ein Warnsignal, das eine Betriebsstörung rechtzeitig anzeigt. Weiterhin ist das so ausgelöste Signal so nutzbar, daß dadurch eine Änderung des Abgasstromes bewirkt wird. Befindet sich beispielsweise der NOx-Speicher in einem Zustand, der nur noch eine äußerst geringe Speicherkapazität aufweist oder es liegt ein Schaden am Speicher vor, wird vorzugsweise die Betriebsweise der NOx-Quelle geändert. Beispielsweise ist diese dann in ein Notprogramm schaltbar.

Ein besonders bevorzugtes Anwendungsgebiet eines erfindungsgemäßen Verfahrens ist eine Verbrennungskraftmaschine, insbesondere ein Diesel- oder Magermotor, die vorzugsweise unter Lastwechseln arbeitet. Ein derartiges Verfahren ist vor allem bei Kraftfahrzeugen einsetzbar. Eine Weiterentwicklung sieht vor, daß in einen NOx-Speicherkatalysator als NOx-Speicher zur Regenerierung ein HC-angereicherter und sauerstoffreicher Gasstrom eingeleitet wird, wobei der Gasstrom vorzugsweise soweit mit HC angereichert wird, daß das gesamte gespeicherte und umwandelbare NOx umgesetzt wird. Dies erfolgt im allgemeinen zunächst durch Bildung von H₂O und CO aus dem HC und dem Sauerstoff, wobei das CO dann mit dem NOx zu CO₂ und N₂ reagiert. Eine andere Weiterentwicklung nutzt eine fette Anreicherung des Verbrennungsgemisches im Motor zur Erzeugung ausreichender Kohlenwasserstoffe und CO. Durch Bildung von H₂O und CO aus Kohlenwasserstoffen und Sauerstoff vor dem NOx-Speicher im Motor wird wiederum nachfolgend der NOx-Speicher regeneriert. Kohlenwasserstoffe und/oder CO haben sich dabei als geeignet zur Regenerierung erwiesen.

Der Speicherkatalysator weist vorzugsweise eine Beschichtung aus einer Mischung aus Oxidations- und Speichermaterialien sowie ein katalytisch aktives Material auf. Er kann aber selbst auch vollständig aus einer Mischung dieser Materialien aufgebaut sein. Je nach dem, wie groß die Anreicherung mit Kohlenwasserstoffen im Gasstrom ist, fällt der Temperaturanstieg in der Regenerationsphase des NOx-Speichers aus. Über die Reaktion des Stickoxides mit Kohlenwasserstoff zu Stickstoff, Wasser und Kohlendioxid wird der Speicher möglichst vollständig freigesetzt. Als besonders vorteilhaft hat es sich herausgestellt, die Reaktion innerhalb von etwa einer Sekunde oder weniger ablaufen zu lassen.

In einem Beispiel für einen Magermotor entspricht ein Liter Speichervolumen etwa 2 g gespeichertes Stickstoffoxid. Dieses entspricht etwa einer Fahrstrecke zwischen einem und zwei Meilen, je nach Betriebsweise eines Fahrzeuges. Dann muß der NOx-Speicher wieder regeneriert werden. Während der NOx-Speicherkatalysator etwa eine Wärmekapazität von 600 J/l/K aufweist, wird eine exotherme Energie von etwa 14 bis 20 kJ je 2 g NOx frei. Bei einer 100 %-Umwandlung der gespeicherten Stickoxide ist ein Temperaturanstieg von 23 K aufgrund der CO-Reaktion sowie ein Temperaturanstieg aufgrund der HC-Reaktion von 48 K feststellbar gewesen.

Die Kohlenwasserstoffanreicherung erfolgt vorteilhafterweise so, daß das vollständig gespeicherte Stickoxid umgesetzt wird. Unter der Voraussetzung eines ausreichenden HC-Gehaltes im Abgas ist die Temperaturerhöhung proportional der gespeicherten Stickoxid-Menge. Die HC-Zugabe ist weiterhin so steuerbar, daß durch Zugabe in geringeren Dosierungen der Speicher nach und nach regeneriert wird. Bei Verwendung entsprechender Meßsensoren ist wiederum eine Aussage über die Fähigkeit von Abschnitten des Speichers möglich. Ist der zugegebene Kohlenwasserstoff zur Regeneration größer als notwendig, werden die Stickoxide vollständig umgesetzt, vorausgesetzt, daß sie auch vollständig aus dem Speicher lösbar sind. Die nicht umgesetzten Kohlenwasserstoffe werden vorteilhafterweise in einem nachfolgenden Dreiwege-Katalysator umgesetzt. Durch Verwendung eines elektronischen Motormanagements für die Temperaturmessung, die Regenerierung und den Rückschluß auf die Betriebsfähigkeit, den Betriebszustand und/oder auf die Speicherkapazität besteht jederzeit Zugriff auf die das Stickoxid verursachende Quelle, den Verbrennungsmotor. Zur Regenerierung kann beispielsweise ein Zündaussetzer verursacht werden, wodurch unverbrannte Kohlenwasserstoffe zum NOx-Speicher gelangen.

Weitere vorteilhafte Ausgestaltungen und Merkmale der Erfindung werden in der folgenden Zeichnung dargestellt. Es zeigen:
- Fig. 1: eine Verbrennungskraftmaschine mit einem nachgeschalteten NOx-Speicherkatalysator und Dreiwege-Katalysator,
- Fig. 2: einen zeitlichen Verlauf einer Regenerationsphase eines NOx-Speichers,
- Fig. 3: verschiedene Verhaltensweisen unterschiedlicher NOx-Speicher über die Zeit und
- Fig. 4: eine Anordnung einer NOx-Quelle mit einem vorgeschalteten Oxidationskatalysator.

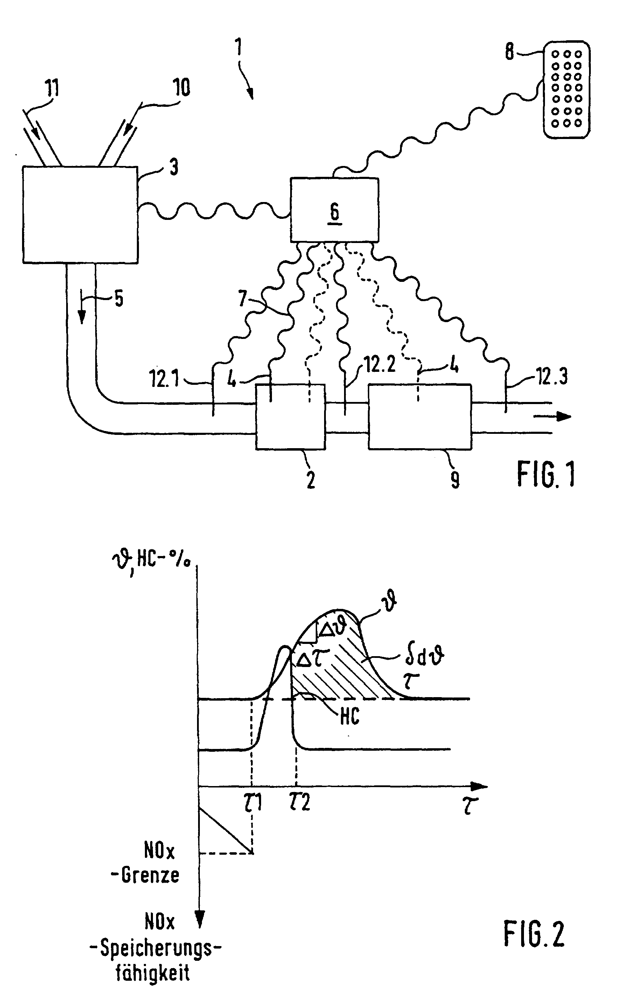

Fig. 1 zeigt eine Anordnung 1 zur Überwachung eines regenerierbaren NOx-Speichers 2. Die Anordnung 1 weist mindestens neben dem regenerierbaren NOx-Speicher 2 Mittel zur Regenerierung des NOx-Speichers 2, in diesem Falle die vorgeschaltete Brennkraftmaschine 3, einen Temperatursensor 4 im NOx-Speicher oder im Abgasstrom 5 zur Überwachung des Speichers 2 und ein elektronisches Bauteil 6, das eine Verbindung 7 zu dem Temperatursensor 4 hat. Das elektronische Bauteil 6 ist vorzugsweise eine Motorsteuerung.

Diese Motorsteuerung ist programmierbar, wobei Eingaben über eine Eingabeeinheit 8 erfolgen. Dem NOx-Speicher 2 ist ein Dreiwege-Katalysator 9 nachgeschaltet. Soll der NOx-Speicher 2 regeneriert werden, da das elektronische Bauteil 6 aus dem der Verbrennungskraftmaschine 3 zuströmenden Brennstoff- 10 und Luftstrom 11 im Zusammenhang mit der Betriebsweise einen Grenzwert für die Stickoxidspeicherfähigkeit des NOx-Speichers berechnet hat, wird die Verbrennungskraftmaschine 3 so angesteuert, daß diese einen Zündaufsetzer aufweist und dadurch der Abgasstrom 5 mit unverbrannten Kohlenwasserstoffen angereichert wird. Andere Maßnahmen, wie eine entsprechende Brennstoffeinspritzung in den Abgasstrom 5, sind ebenfalls durchführbar. Ist der zugesetzte und unverbrannte Kohlenwasserstoff-Anteil höher als für die Regenerierung benötigt, wird der Überschuß im Katalysator 9 umgesetzt. Weiterhin weist die Anordnung 1 eine erste Lambda-Sonde 12.1 vor dem NOx-Speicher 2, eine zweite Lambda-Sonde 12.2 zwischen dem Speicher 2 und dem Katalysator 9 und eine dritte Lambda-Sonde 12.3 hinter dem Katalysator 9 auf. Sie dienen zur Überprüfung des Kohlenwasserstoffgehaltes des Abgasstromes 5 und können gleichzeitig zur Steuerung bzw. Regelung der Verbrennungskraftmaschine 3 genutzt werden. Anstelle der Lambda-Sonden 12.1, 12.2 und 12.3 sind aber auch Temperatursensoren anbringbar. Der Dreiwege-Katalysator 9 selbst weist ebenfalls einen Temperatursensor 4 zur Überwachung auf. Die gestrichelte Verbindungslinie von diesem Temperatursensor 4 zum elektronischen Bauteil 6 zeigt die Optionalität dieser Überwachung an. Der NOx-Speicher 2 weist in einer anderen Anordnung zwei oder mehr Temperatursensoren 4 auf, was gestrichelt angedeutet ist. Entsprechend der dargestellten Anordnung 1 ist somit eine Vorrichtung ausbildbar zur Überwachung des regenerierbaren NOx-Speichers 2 in dem Abgasstrang 13, durch den das NOx-haltige Gas 5 strömt, wobei der Speicher 2 ein Katalysator ist. Der Katalysator weist eine Oxidationsfähigkeit auf, die zumindest Kohlenmonoxid und Kohlenwasserstoff betrifft. Für die Temperaturmessung hat es sich bei einer derartigen Vorrichtung als vorteilhaft erwiesen, wenn der Temperatursensor etwa hinter einem Viertel der Länge des Katalysators, von einer Anströmseite betrachtet, in diesem angeordnet ist. Vorzugsweise ist dieser etwa auf der Hälfte der Länge des Katalysators angeordnet.

Fig. 2 zeigt ein mögliches Verhalten der Temperatur in einem NOx-Speicherkatalysator über die Zeit. Bei Erreichen einer Stickoxid-Grenze wird zum Zeitpunkt τ1 der Abgasstrom mit unverbrannten Kohlenwasserstoffen bis zum Zeitpunkt τ2 angereichert. Daraufhin findet im NOx-Speicherkatalysator eine exotherme Reaktion statt, die sich als Temperaturanstieg auswirkt. Dieser ist meßbar und auswertbar, was durch die Steigung Δϑ/Δτ und die Integrierung angedeutet ist.

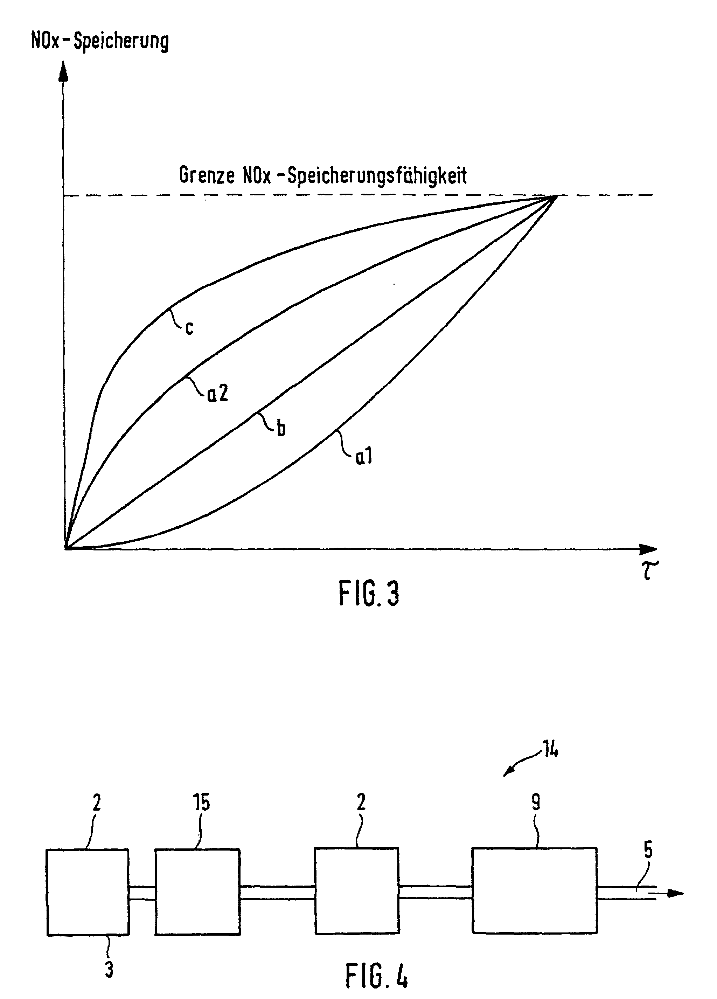

Fig. 3 zeigt verschiedene Verläufe der Speicherung von Stickoxiden in einem NOx-Speicher. Der Verlauf a1 erfolgt entsprechend einer monoton wachsenden Hyperbelfunktion, a2 entsprechend einer monoton fallenden Hyperbelfunktion, der Verlauf b linear und der Verlauf c entsprechend einer Wurzelfunktion. Neben diesen Verläufen sind auch sinusförmige Funktionen oder andere möglich. Da die Speicherung von Stickoxiden eine endotherme Reaktion auslöst, bedeutet dieses ein Absinken der Temperatur des Speichers. Ist nun für einen Speicher der Verlauf der Speicherung bekannt, kann daraus mit der Temperatur eine Basis als Vergleichswert für eine Temperaturmessung geschaffen werden. Diese Basis läßt dann im Zusammenhang mit der Messung einer Temperatur unmittelbar vor, während oder unmittelbar nach der Regeneration eine Aussage über den NOx-Speicher zu. Zur Erlangung dieser Basis ist es beispielsweise möglich, über den elektrischen Widerstand des Speichers oder aufgrund von Erfahrungswerten eine Basistemperatur zu gewinnen.

Figur 4 zeigt eine zweite Anordnung 14 mit einem Oxidationskatalysator 15 in Strömungsrichtung vor dem NOx-Speicher 2, der näher zur NOx-Quelle 3 als zum NOx-Speicher 2 angeordnet ist. Bei unmittelbaren Anschluß an die NOx-Quelle 2 erhitzt der Abgasstrom 5 den Oxidationskatalysator 15 zügigst auf. Für die Regenerierung hat es sich zur verbesserten Aufnahme und Ausbildung eines charakteristischen Temperaturprofiles am NOx-Speicher 2 als zweckmäßig erwiesen, wenn das Abgas zur Regenerierung einen geringeren Sauerstoffanteil als im Normalbetrieb aufweist. Dieses ist beispielsweise durch Anfetten eines Verbrennungsgemisches einer Berbrennungskraftmaschine möglich. Eine Sauerstoffspeicherfähigkeit des NOx-Speichers 2 ist vorteilhafterweise geringer als die des nachfolgenden Drei-Wege-Katalysators 9, vorzugsweise etwa nur ein Drittel, insbesondere weniger als ein Zehntel oder noch geringer. Der Abgasstrom 5 kann dann noch so fett sein, er wird auf jeden Fall umgesetzt, während der NOx-Speicher 2 wiederum nicht zu stark sich aufgrund einer exothermen Reaktion erhitzt. Der Oxidationskatalysator 15 hat daher ebenfalls eine größere Sauerstoffspeicherfähigkeit als der NOx-Speicher 2 aber eine kleinere Sauerstoffspeicherfähigkeit als der Drei-Wege-Katalysator 9. Der NOx-Speicher 2 weist insbesondere höchstens eine verschwindend geringe Fähigkeit zur Speicherung von Sauerstoff auf bzw. gar keine Fähigkeit dazu.

Der vorliegenden Erfindung gelingt es, eine sichere Überwachung des Stickoxidausstoßes von NOx-Quellen durch Verwendung und Überprüfung eines Speichers zu schaffen und dadurch zukünftige Abgasgrenzwerte beispielsweise bei Diesel- oder Magermotoren für Kraftfahrzeuge einhalten zu können.

### Bezugszeichenliste

- 1: Anordnung
- 2: NOx-Speicher
- 3: Verbrennungskraftmaschine
- 4: Temperatursensor
- 5: Abgasstrom
- 6: elektronisches Bauteil
- 7: Verbindung
- 8: Eingabeeinheit
- 9: Dreiwege-Katalysator
- 10: Brennstoffstrom
- 11: Luftstrom
- 12.1,12.2.,12.3: Lambda-Sonde
- 13: Abgasstrang
- 14: zweite Anordnung
- 15: Oxidationskatalysator

## Patentansprüche

1. Verfahren zur Überwachung eines regenerierbaren NOx-Speichers (2) in einem Abgasstrang (13), durch den ein NOx-haltiges Gas (5) strömt, bei dem im Abgasstrang (13) eine Temperaturmessung durchgeführt wird, aus der zumindest auf die Speicherkapazität des NOx-Speichers (2) geschlossen werden kann, wobei das im NOx-Speicher (2) gespeicherte NOx in Abhängigkeit vom NOx-haltigen Gasstrom (5) berechnet wird, und bei Überschreiten eines vorgebbaren Grenzwertes für das NOx eine Regenerierung ausgelöst wird, **dadurch gekennzeichnet, daß** aus der bei der Regenerierung gemessenen Temperatur durch einen Vergleich mit einem vorgebbaren Temperaturwert und/oder einer vorgebbaren Temperaturbandbreite ein Rückschluß auf die Betriebsfähigkeit, den Betriebszustand und/oder auf die Speicherkapazität des NOx-Speichers (2) erfolgt.

2. Verfahren nach Anspruch 1, **dadurch gekennzeichnet, daß** die Temperaturmessung zu einem definierten Zeitpunkt durchgeführt wird, bevor ein Grenzwert der NOx-Speicherkapazität des NOx-Speichers erreicht ist.

3. Verfahren nach Anspruch 1 oder 2, **dadurch gekennzeichnet, daß**
- eine direkte Temperaturmessung zumindest eines Teiles des NOx-Speichers (2) oder
- eine mittelbare Temperaturmessung mittels des durch den NOx-Speicher (2) durchströmenden Gasstromes
- bei der Regenerationsphase des NOx-Speichers (2) durchgeführt wird.

4. Verfahren nach einem der vorhergehenden Ansprüche, **dadurch gekennzeichnet, daß** die Temperatur so gemessen wird, daß sie direkt einen Rück-Rückschluß auf die Betriebsfähigkeit, den Betriebszustand und/oder auf die Speicherkapazität des NOx-Speichers (2) zuläßt.

5. Verfahren nach einem der Ansprüche 1 bis 3, **dadurch gekennzeichnet, daß** der Rückschluß auf die Betriebsfähigkeit, den Betriebszustand und/oder die Speicherkapazität des NOx-Speichers (2) mittels eines funktionalen Zusammenhangs zwischen der gemessenen Temperatur, einer Charakteristik des NOx-Speichers (2) und/oder eines Gasbestandteiles des NOx-haltigen Gases erfolgt.

6. Verfahren nach einem der Ansprüche 3 bis 5, wobei die Regenerationsphase innerhalb einer Sekunde oder weniger abgeschlossen wird.

7. Verfahren nach einem der vorhergehenden Ansprüche, **dadurch gekennzeichnet, daß** eine kontinuierliche Temperaturmessung erfolgt und das zeitliche Verhalten der Temperatur überwacht wird.

8. Verfahren nach einem der Ansprüche 3 bis 7, **dadurch gekennzeichnet, daß** die Regenerationsphase durch Hinzufügen eines die Regeneration auslösenden Mittels in den NOx-haltigen Gasstrom erfolgt.

9. Verfahren nach einem der vorhergehenden Ansprüche, **dadurch gekennzeichnet, daß** die Regenerationsphase mittels einer katalytischen Reaktion im NOx-Speicher (2) durchgeführt wird.

10. Verfahren nach einem der vorhergehenden Ansprüche, wobei das Verfahren für eine Verbrennungskraftmaschine (3), insbesonders einen Dieseloder Magermotor, zur Überwachung eines dem Verbrennungsmotor nachgeschalteten NOx-Speichers (2) angewendet wird.

11. Verfahren für eine Verbrennungskraftmaschine nach Anspruch 10, **dadurch gekennzeichnet, daß** in einen NOx-Speicherkatalysator als NOx-Speicher (2) zur Regenerierung ein mit Kohlenwasserstoffen und/oder CO angereicherter Gasstrom eingeleitet wird, vorzugsweise durch ein fettes Verbrennungsgemisch, wobei der Gasstrom vorzugsweise soweit mit Kohlenwasserstoffen und/oder CO angereichert wird, daß das gesamte gespeicherte und umwandelbare NOx umgesetzt wird.

12. Verfahren für eine Verbrennungskraftmaschine nach Anspruch 10 oder 11, **dadurch gekennzeichnet, daß** durch Bildung von H₂O und CO aus Kohlenwasserstoffen und Sauerstoff vor dem NOx-Speicher, insbesondere im Motor, nachfolgend der NOx-Speicher regeneriert wird, wobei das CO mit dem NOx weiter zu N₂ und CO₂ reagiert.

13. Verfahren für eine Verbrennungskraftmaschine nach einem der Ansprüche 10 bis 12, **dadurch gekennzeichnet, daß** die Temperaturmessung, die Regenerierung und der Rückschluß auf die Betriebsfähigkeit, den Betriebszustand und/oder auf die Speicherkapazität über ein elektronisches Motormanagement erfolgt.

14. Verfahren nach einem der vorhergehenden Ansprüche, **dadurch gekennzeichnet, daß** ab einer definierten gemessenen Temperatur ein Signal ausgelöst wird, wobei das Signal von einer Wertung der Betriebsfähigkeit, des Betriebszustandes und/oder der Speicherkapazität des NOx-Speichers (2) abhängt.

15. Verfahren nach einem der vorhergehenden Ansprüche, **dadurch gekennzeichnet, daß** ab einer definierten gemessenen Temperatur ein Signal ausgelöst wird, welches eine Betriebsstörung anzeigt und/oder die Betriebsweise einer NOx-Quelle ändert.

## Claims

1. A method of monitoring a regeneratable NOₓ store (2) in an exhaust system (13) through which an NOₓ-bearing gas (5) flows, in which a temperature measurement operation is effected in the exhaust system (13), from which it is possible to infer at least the storage capacity of the NOₓ store (2), wherein the NOₓ stored in the NOₓ store (2) is calculated in dependence on the NOₓ-bearing gas flow (5), and a regeneration operation is triggered when a predeterminable limit value for the NOₓ is exceeded, **characterised in that** a conclusion about the operability, the operating condition and/or the storage capacity of the NOₓ store (2) is effected from the temperature measured in the regeneration operation by a comparison with a predeterminable temperature value and/or a predeterminable temperature band width.

2. A method according to claim 1 **characterised in that** the temperature measurement operation is carried at a defined moment in time before a limit value of the NOₓ storage capacity of the NOₓ store is reached.

3. A method according to claim 1 or claim 2 **characterised in that**
- direct temperature measurement at least of a part of the NOₓ store (2) or
- indirect temperature measurement by means of the gas flow flowing through the NOₓ store (2)
- is effected in the regeneration phase of the NOₓ store (2).

4. A method according to one of the preceding claims **characterised in that** the temperature is so measured that it directly permits a conclusion to be drawn about the operability, the operating condition and/or the storage capacity of the NOₓ store (2).

5. A method according to one of claims 1 to 3 **characterised in that** the conclusion about the operability, the operating condition and/or the storage capacity of the NOₓ store (2) is effected by means of a functional relationship between the measured temperature, a characteristic of the NOₓ store (2) and/or a gas constituent of the NOₓ-bearing gas.

6. A method according to one of claims 3 to 5 wherein the regeneration phase is concluded within a second or less.

7. A method according to one of the preceding claims **characterised in that** continuous temperature measurement is effected and the time variation in the temperature is monitored.

8. A method according to one of claims 3 to 7 **characterised in that** the regeneration phase is effected by adding a regeneration-triggering agent into the NOₓ-bearing gas flow.

9. A method according to one of the preceding claims **characterised in that** the regeneration phase is effected by means of a catalytic reaction in the NOₓ store (2).

10. A method according to one of the preceding claims wherein the method is used for an internal combustion engine (3), in particular a diesel or lean-burn engine, for monitoring an NOₓ store (2) connected downstream of the internal combustion engine.

11. A method for an internal combustion engine according to claim 10 **characterised in that** there is introduced into an NOₓ store catalytic converter as the NOₓ store (2) for the regeneration operation a gas flow which is enriched with hydrocarbons and/or CO, preferably by virtue of a rich combustion mixture, wherein the gas flow is preferably enriched with hydrocarbons and/or CO to such an extent that all the stored and convertible NOₓ is reacted.

12. A method for an internal combustion engine according to claim 10 or claim 11 **characterised in that**, by virtue of the formation of H₂O and CO from hydrocarbons and oxygen upstream of the NOₓ store, in particular in the engine, subsequently the NOₓ is regenerated, the CO further reacting with the NOₓ to form N₂ and CO₂.

13. A method for an internal combustion engine according to one of claims 10 to 12 **characterised in that** temperature measurement, regeneration and the conclusion about the operability, the operating condition and/or the storage capacity are implemented by way of an electronic engine management system.

14. A method according to one of the preceding claims **characterised in that** as from a defined measured temperature a signal is triggered, wherein the signal depends on an evaluation of the operability, the operating condition and/or the storage capacity of the NOₓ store (2).

15. A method according to one of the preceding claims **characterised in that** as from a defined measured temperature a signal is triggered, which indicates an operating fault and/or changes the mode of operation of an NOₓ source.

## Revendications

1. Procédé destiné au contrôle d'un accumulateur de NOx (2), pouvant être régénéré, dans un brin de gaz d'échappement (13) à travers lequel coule un gaz contenant du NOx (5), dans lequel dans le brin de gaz d'échappement (13) une mesure de température est effectuée à partir de laquelle on peut au moins déduire la capacité d'accumulation de l'accumulateur de NOx (2), dans quel cas le NOx accumulé dans l'accumulateur de NOx (2) est calculé en fonction du flux de gaz contenant du NOx (5) et dans le cas de dépassement d'une valeur limite prédéterminable une régénération pour le NOx est déclenchée, **caractérisé en ce qu'**à partir de la température mesurée lors de la régénération par une comparaison avec une valeur de température prédéterminable et/ou avec un écart de températures prédéterminé une conclusion quant à l'opérabilité, l'état de fonctionnement et/ou la capacité d'accumulation de l'accumulateur de NOx (2) est effectuée.

2. Procédé selon la revendication 1, **caractérisé en ce que** la mesure de température est effectuée à un moment défini avant qu'une valeur limite de la capacité d'accumulation du NOx de l'accumulateur de NOx soit atteinte.

3. Procédé selon la revendication 1 ou 2, **caractérisé en ce**
- **qu'**une mesure de température directe d'au moins une partie de l'accumulateur de NOx (2) ou
- **qu'**une mesure de température indirecte au moyen du flux de gaz traversant l'accumulateur de NOx (2)
- est effectuée dans la phase de régénération de l'accumulateur de NOx (2).

4. Procédé selon l'une des revendications précédentes, **caractérisé en ce que** la température est mesurée de telle manière qu'elle permet directement une conclusion quant à l'opérabilité, l'état de fonctionnement et/ou la capacité d'accumulation de l'accumulateur de NOx (2).

5. Procédé selon l'une des revendications 1 à 3, **caractérisé en ce que** la conclusion quant à l'opérabilité, l'état de fonctionnement et/ou la capacité d'accumulation de l'accumulateur de NOx (2) est effectuée au moyen d'une relation fonctionnelle entre la température mesurée, une caractéristique de l'accumulateur de NOx (2) et/ou un constituant de gaz du gaz contenant le NOx.

6. Procédé selon l'une des revendications 3 à 5, dans quel cas la phase de régénération est terminée en une seconde ou moins.

7. Procédé selon l'une des revendications précédentes, **caractérisé en ce qu'**une mesure continue de température est effectuée et **en ce que** le comportement temporel de la température est contrôlé.

8. Procédé selon l'une des revendications 3 à 7, **caractérisé en ce que** la phase de régénération est effectuée en ajoutant dans le flux de gaz contenant le NOx un agent déclenchant la régénération.

9. Procédé selon l'une des revendications précédentes, **caractérisé en ce que** la phase de régénération est effectuée au moyen d'une réaction catalytique dans l'accumulateur de NOx (2).

10. Procédé selon l'une des revendications précédentes, dans quel cas le procédé pour une machine à combustion interne (3) est utilisé, notamment pour un moteur diesel ou un moteur à réglage pauvre, pour le contrôle d'un accumulateur de NOx (2) agencé en aval du moteur à combustion interne.

11. Procédé pour une machine à combustion interne selon la revendication 10, **caractérisé en ce que** dans un catalyseur d'accumulation de NOx en tant qu'accumulateur de NOx (2) un flux de gaz enrichi d'hydrocarbures et/ou de CO est introduit pour la régénération, de préférence par un mélange riche de combustion, le flux de gaz étant enrichi de préférence d'hydrocarbures et/ou de CO au point de transformer tout le NOx accumulé et convertible.

12. Procédé pour une machine à combustion interne selon la revendication 10 ou 11, **caractérisé en ce que** par la formation de H₂O et de CO à partir d'hydrocarbures et d'oxygène, en amont de l'accumulateur de NOx, notamment dans le moteur, l'accumulateur de NOx est régénéré dans la suite, le CO réagissant dans la suite avec le NOx pour former du N₂ et du CO₂.

13. Procédé pour une machine à combustion interne selon l'une des revendications 10 à 12, **caractérisé en ce que** la mesure de température, la régénération et la conclusion quant à l'opérabilité, l'état de fonctionnement et/ou la capacité d'accumulation est effectuée par une gestion électronique de moteur.

14. Procédé selon l'une des revendications précédentes, **caractérisé en ce qu'**à partir d'une température définie mesurée un signal est déclenché, le signal dépendant de l'évaluation de l'opérabilité, de l'état de fonctionnement et/ou de la capacité d'accumulation de l'accumulateur de NOx (2).

15. Procédé selon l'une des revendications précédentes, **caractérisé en ce qu'**à partir d'une température définie mesurée un signal est déclenché qui indique une perturbation de fonctionnement et/ou qui modifie le mode d'opération d'une source de NOx.
